# EUROPEAN PATENT APPLICATION

(11) **EP 3 929 657 A1**
(43) Date of publication of application: **29.12.2021**
(21) Application number: 20182091.7
(22) Date of filing: 24.06.2020
(51) Int. Cl.: G02F 1/155, G02F 1/1514

(54) **ELECTROCHROMIC DEVICE AND METHOD FOR PRODUCING THE SAME**

(71) Applicant: H. Glass SA, 1690 Villaz-St-Pierre (CH)
(72) Inventor: KORTZ, Carsten, 1004 Lausanne (CH); ZHANG, Xiaoyu, 1029 Villars-Sainte-Croix (CH); LIU, Yuhang, 1030 Bussigny (CH)
(74) Representative: Schneiter, Sorin

(57) **Abstract**

The present invention concerns an electrochromic device comprising two electrodes, an anode and a cathode, provided on the same substrate, the electrodes thereby being disposed one laterally next to the other, which being preferably on the same substrate and thus being at the same level horizontally. Surprisingly, a functional electrochromic device is provided, with the opposed substrate being preferably free of any electrode. In this manner, it is possible to avoid the need of a conductive substrate on the opposed side, which means lower material costs, lower production costs, and higher transparency.

## Description

### Technical Field

The present invention relates to an electrochromic device, to an electrochromic system and to methods for producing the same.

### Background Art and Problems Solved by the Invention

Electrochromic (EC) systems and devices change their optical transmission in a continual but reversible manner upon application of an electric voltage. These systems are wildly used to control incoming light intensity into buildings, aircrafts, or cars. They are also used to realize display devices for various applications.

EC materials change their optical appearance, e.g. their color, when an electric voltage is applied. This change of coloration is caused by an electrochemical redox process, whereby the EC materials are oxidized or reduced. Materials that show this electrochromic behavior are transition metal oxides like WO₃, TiO₂, V₂O₅, NiO, organic molecules and polymers like PEDOT, viologens and arylamines. Of high interest among these materials are those which show a high transparency in one redox state and a strong coloration in another redox state, such as the viologens and N,N,N',N'-tetramethyl-1,4-phenylenediamine (TMPD). For example, viologen dications are colorless whereas the viologen radical cations are intensely colored depending on the radical group (Roger J. Mortimer, Annu. Rev. Mater. Res. 2011. 41:241-68).

Generally, EC materials are used in an electrochemical cell, wherein two electrodes facing each other are used with the EC material in between (Kortz, el al, 2019, Alesanco et al, 2018). To exploit the change in coloration of the EC material, at least one of the electrodes is transparent, whereas for transparent EC devices, both electrodes need to be transparent. For those applications, usually two transparent conductive substrates are used where each of them shows a transparency in the range of 70% to 85% depending on the material and the sheet resistance of the substrates (Liu et al, 2017, Kateb et al, 2016). Using two of these conductive substrates in one device reduces the maximum transmission to 50% till 75% depending on the substrates which is not satisfying for high transparent applications. Furthermore, these transparent conductive substrates are extremely costly which is a major obstacle for which transparent electrochromic devices have not found many applications yet, especially when considering the use of these devices for large surface areas.

Thus, there is a need for highly transparent and colorless EC systems in their neutral states without any applied potential, that upon application of an electric voltage demonstrate high contrasted color, fast switching time and electrochemical stability.

It is an objective of the invention to reduce the number of light absorbing parts and/or of expensive parts on an electrochromic device.

It is an objective of the invention to reduce the use of transparent conductive materials (TCM) and in particular the use of TCM coated substrates and/or transparent conductive substrates. TCMs include transparent metal oxide materials.

It is also an embodiment to provide EC devices exhibiting a simpler architecture and which can be obtained in a simpler, more efficient and/or less expensive manufacturing process.

### Summary of the Invention

Remarkable, the present inventors found that functional electrochromic devices could be obtained when placing electrodes on one substrate, preferably adjacently. The inventors surprisingly found that, contrary to the teachings of the prior art, electrodes placed on opposed substrates are not required for obtaining a functional electrochromic device.

In an aspect, the invention provides an electrochromic device, in which all electrodes are combined in or obtained from one transparent conductive material layer.

In an aspect, the invention provides an electrochromic device in which first and second electrodes, or anode and cathode, respectively, are provided on the same substrate.

In an aspect, the invention provides an electrochromic device comprising first and second opposed substrates, a second substrate being substantially free of an electrode, in particular free of an anode or cathode that functions with a cathode or anode, respectively, provided on said first electrode.

In an aspect, the invention provides an electrochromic device comprising a substrate at least one electrochromic material a first electrode and a second electrode, wherein said first and second electrode can work as an anode and a cathode of said device, respectively, and/or vice versa, wherein said first and second electrodes are provided on said substrate.

In an aspect, the invention provides an electrochromic device comprising a substrate, at least one electrochromic material, a first electrode and a second electrode, wherein said first and second electrode can work as an anode and a cathode, respectively, and/or vice versa, wherein said first and second electrodes comprise a conductive material that is deposited on or otherwise directly connected to said substrate, the device being configured to establish and/or allow an establishment of an electric potential between said first electrode and said second electrode, for example during operation of the device.

In an aspect, the invention provides an electrochromic device comprising:
- a substrate;
- a first electrode and a second electrode, wherein said first and second electrode can work as an anode and a cathode, respectively, and/or vice versa,
   wherein said first and second electrodes comprise a conductive material that is deposited on or otherwise directly connected to said substrate, the device being configured to establish and/or allow an establishment of an electric potential between said first electrode and said second electrode;
- a charge transport medium;
- a first redox active species;
- a second redox active species;
- optionally one or more further redox active species;
wherein at least one selected from said first and second redox active species comprises an electrochromic material;
wherein said electrochromic material is provided:
- in said charge transport medium, or,
- on one or both selected from said first electrode and said second electrode.

Preferably, said electrochromic material is provided such that when said electric potential is established, changed or inversed between said first electrode and said second electrode, said electrochromic material undergoes a color change.

In an aspect, the invention provides a method for preparing an electrochromic device, the method comprising: providing a substrate, and forming one or more pairs of first and second electrodes on said substrate, preferably by depositing said first and second electrodes on said substrate or by otherwise directly connecting said first and second electrodes to said substrate

In an aspect, the invention provides a method for preparing an electrochromic device, the method comprising: providing a substrate; forming first and second electrodes on said substrate, preferably by depositing said first and second electrodes on said substrate or by otherwise directly connecting said first and second electrodes to said substrate; providing a chamber for enclosing said electrodes and for providing a space for a charge transport medium; providing said charge transport medium in said space; providing an electrochromic material, and, wherein said electrochromic material is added in said charge transport medium, or is deposited so as to be in electric contact with said first electrode and/or second electrode, preferably in permanent electric contact.

In an aspect, the invention provides an electrochromic system comprising the device of the invention, the system further comprising a control unit configured to establish said electric potential between said first electrode and said second electrode.

In an aspect, the invention provides a method for producing the device of the invention.

In an aspect, the invention provides a window, panel, mirror or display comprising the device of the invention.

Thanks to the present invention, the transmitted light preferably needs to pass only one transparent conductive layer instead of two, the latter being usually the case for all transparent electrochromic devices known hitherto in the art.

The present invention makes it possible to avoid the need of a conductive substrate on the opposed side, which means lower material costs, lower production costs, and higher transparency.

Further aspects and preferred embodiments of the invention are defined herein below and in the appended claims. Further features and advantages of the invention will become apparent to the skilled person from the description of the preferred embodiments given below.

### Brief Description of the Drawings

**Figures 1A** and **1B** are schematic cross sections of an electrochromic device according to a first embodiment of the invention. Fig. 1B shows further details for illustrating the working principle of the device.
**Figure 2** is a schematic top down view on the substrate comprising the electrodes of the first embodiment of the invention.
**Figure 3** is a schematic cross section of an electrochromic device according to a second embodiment of the invention.
**Figures 4A** and **4B** are a top down view on the substrate comprising electrodes and a schematic cross section, respectively, of an electrochromic device according to a third embodiment of the invention.
**Figures 5A** and **5B** are a top down view on the substrate comprising electrodes and a schematic cross section, respectively, of an electrochromic device according to a fourth embodiment of the invention.
**Figure 6** is a schematic top down view on the substrate comprising electrodes of an electrochromic device according to a fifth embodiment of the invention.
**Figure 7** is a schematic cross section of an electrochromic device according to a sixth embodiment of the invention.
**Figure 8** is a top-down photograph of an electrochromic device of a seventh embodiment of the invention.
**Figure 9** shows the spectral transmission data of the device shown in Figure 8.

Hereinafter, preferred embodiments of the device of the invention are described, in order to illustrate the invention, without any intention to limit the scope of the present invention.

### Detailed Description of the Preferred Embodiments

The present invention relates to an electrochromic device comprising a substrate, wherein a first electrode and a second electrode are provided on said substrate. Preferably, the electrodes are provided on said substrate. In a preferred embodiment, said first and second electrodes are deposited or otherwise directly connected on said substrate. Preferably, said first and second electrodes are permanently connected and/or rigidly connected, to the substrate.

For the purpose of the present specification, an electrochromic device is a device comprising one or more electrochromic material provided in said device such that when an electric potential is established, changed or inversed between said first electrode and said second electrode, an optical state of the electrochromic material changes. Preferably, the electrochromic material is provided so as to change the optical properties in dependence of a voltage applied between first and second electrodes of the device.

For the purpose of the present specification, the term "comprises" and its various grammatical forms is intended to mean "includes, amongst other". It is not intended to mean "consists only of".

Electrochromic devices of the present invention may be used in architecture, buildings, construction in general, aquariums, vehicles, such as trains, ships, cars, and display technologies, for example.

Electrochromic devices of the invention may be used in windows, panels, mirrors, windscreens -or shields, or displays, for example in the aforementioned buildings, vehicles, and so forth. The devices of the invention may potentially be used in the context of all transparent objects, such as all objects using or comprising glass or other transparent materials.

The electrochromic device is preferably configured such that at least part of the device can exist in two states: a first device state and a second device state, wherein the first device state is preferably more transparent, at least with respect to visible light, than said second device state. The device state depends on the redox state of the electrochromic material comprised in the device. Depending on the device, there may be more than two states, for example there may be a continuous or graduated transition between said first and second device states.

In simplifying and possibly more speaking terms of some embodiments, one may say that at least part of the device is configured to be substantially transparent in the first device state and colored (or less-transparent) in the second device state.

The device state reflects or depends on the redox state of the electrochromic material in the device. The electrochromic material is or comprises a redox active species, which may exist in at least two different redox states. Depending on the redox state, the electrochromatic material has preferably different optical properties. "Optical properties", for the purpose of the present specification, encompass different properties of transparency, translucency, color, reflectivity and/or opacity, depending on the redox state.

The device of the invention may comprise one, two or more different electrochromic materials, having different optical properties. Preferably, the electrochromic material may exist at least in two optical states, which may also be referred to as two color states, a first optical state in which the electrochromic material is brighter, more transparent, less colored and/or less opaque than in said second optical state.

Materials that show electrochromic behavior may be selected from transition metal oxides like WO₃, TiO₂, V₂O₅, NiO and organic molecules and polymers like PEDOT, viologen and arylamines, for example. Numerous organic, inorganic and possible composite materials that have electrochromic properties are available, and the present invention is not intended to be limited to any one of said materials. The present invention may in principle be worked with any one known electrochromic material, as well as with electrochromic materials that will be found or prepared in the future.

In an embodiment, the term "transparent" is intended to mean the property of letting pass at least some light of the visible spectrum of light. In another embodiment, the term "transparent" refers to the property of letting pass at least some light selected from visible light, infrared light and/or UV light.

In a preferred embodiment, the substrate on which said first and second electrodes are provided is preferably transparent. The substrate may comprise or be made of glass, plastic material and/or any organic polymer-based material, such as polycarbonate, polyethylene terephthalate or the like, for example. The substrate may be made from a rigid or a flexible material.

The substrate preferably provides mechanical stability to the device.

The substrate is preferably made from or comprises one continuous material, but the invention also encompasses substrate a plurality of sections, boards or laths being placed one next to the other so as to provide an overall substrate comprising a plurality of part-substrates.

Preferably, the substrate is overall plane and/or flat. However, the invention also encompasses curved or otherwise shaped substrates.

Preferably, the substrate comprises two opposed main surfaces. Preferably, one or both of said two opposed main surfaces is smooth. However, the invention also encompasses substrates comprising one or two patterned surfaces, such as one or both main surfaces comprising grooves, impressions, depressions, and the like.

The thickness of the substrate is preferably in the range of 0.01 to 15 mm, preferably 0.05 to 7 mm, more preferably 0.1 to 5 mm, most preferably 0.5 to 2 mm.

In an embodiment, said first and second electrode can work as an anode and a cathode of said device, respectively, and/or vice versa. Preferably, said first and second electrode provide a functional anode-cathode assembly and/or circuit during operation of the device. Preferably, said first and second electrode are provided and/or configured in said device so as to allow a change of the optical properties of the one or more electrochromic materials of the device, preferably by being configured to induce a redox reaction of said electrochromic material, preferably upon the establishment or the change (e.g. inversion) of an electric potential between said first and second electrodes.

In an embodiment, said first and second electrodes comprise a conductive material that is deposited on or otherwise connected to said substrate, preferably permanently connected to the substrate.

In an embodiment, said first electrode and said second electrode comprise or essentially consist of a transparent conductive layer (TCL), for example comprising a transparent conductive oxide (TCO), or are in electric contact with said transparent conductive layer, preferably in permanent electric contact. In an embodiment, said first and second electrodes preferably comprise or consist essentially of transparent metal oxide materials, preferably a transparent conductive oxide (TCO). Examples of such materials include indium doped tin oxide (ITO), fluorine doped tin oxide (FTO), ZnO-Ga₂O₃, ZnO-Al₂O₃, tin oxide, antimony doped tin oxide (ATO), SrGeO₃ and zinc oxide, or combinations thereof. Other or additional conductive materials that may be used for said first and second electrodes and/or for said TCL may be selected from graphene, silver nanowires, multilayer transparent thin film electrodes or similar materials.

These transparent materials may be deposited on the substrate or otherwise provided on the substrate, preferably so as to be in direct physical contact with the substrate. In some embodiments, the first and second electrodes may be provided by patterning or scribing. For example, a TCO-coated substrate, such as TCO-glass or plastic may be scribed or patterned, for example laser scribed, dry- or wet-etched, so as to form said electrodes. TCO-coated substrates are commercially available.

Preferably, the first and second electrodes, and in particular said transparent conductive layer, has a thickness of 0.1nm to 1000 nm, preferably 1nm to 500nm, most preferably 2nm to 100nm.

Preferably, said first and second electrodes are not in direct physical contact one with respect to the other. Preferably, said first and second electrodes are electrically separated. Electron transfer between said first and second electrodes is preferably mediated by a charge transport medium, as will be detailed elsewhere in this specification.

Preferably, the device is configured to establish, or to allow the establishment of, an electric potential or voltage between said first electrode and said second electrode. In an embodiment, said first and second electrode can work as an anode and a cathode, respectively, and/or vice versa.

In a preferred embodiment, said first and second electrodes are electrically separate.

Preferably, each of said first and second electrodes are individually addressable to apply the electrical voltage.

As the skilled person can understand from the above, a second or opposed substrate carrying an opposed electrode (anode or cathode), is not necessary in accordance with the invention and is preferably absent. In particular, a second, opposed substrate comprising a second electrode wherein the device is configured to establish an electric potential between the first electrode provided on the first substrate and said second electrode on the opposed substrate, is preferably absent.

In other words, electrodes required for operating the device and thereby for providing a functional device are preferably provided on the same substrate and/or on the same of side of two sides or substrates of the device. This refers in particular to electrodes involved and/or necessary for changing the optical and/or redox state of the electrochromic material or materials comprised in the device.

In a preferred embodiment, the first and second electrode are preferably provided on the same substrate.

In a preferred embodiment, the first and second electrode are preferably adjacently provided on the substrate.

In a preferred embodiment, the first and second electrode are preferably formed from the same conductive layer deposited on the substrate. The conductive layer may comprise a multilayer structure. For example, the electrodes are formed from at least one continuous conductive layer by forming separation lines and/or separation areas on the continuous conductive layer (e.g. by scribing or etching), thereby forming said electrically separate first and second electrodes.

The present invention is preferably not limited with respect to the shape or form of the substrate. For example, the substrate may be curved or flat, or may present any three-dimensional shape.

In an embodiment, the substrate provides a smooth surface, on which said first electrode and said second electrode are provided, for example deposited.

In a preferred embodiment, said substrate contains an even and/or flat surface, wherein both said first electrode and a second electrode are provided on said even and/or flat surface.

In a preferred embodiment, said first electrode and a second electrode are preferably provided and/or deposited on a same vertical height or level defined by said even and/or flat surface of the substrate.

Preferably, the first and second electrodes are deposited on the same plane and/or or centered vertically on the same plane.

In another embodiment, the substrate is curved, concave and/or convex. In accordance with this embodiment, the first and second electrodes are preferably provided, for example deposited, on a curved, concave and/or convex substrate.

Preferably, said first and second electrode are not provided one above the other or one partially above the other on a vertical axis. Preferably, said first and second electrode do not overlap when seen from top down, that is, by an observer looking in a perpendicular, normal direction (vertical) with respect to outer surface of the device.

In an embodiment, said first and second electrodes are distributed with respect to a horizontal axis. In other words, said first and second electrodes are preferably provided side by side on said substrate, preferably one besides the other or one next to the other. Horizontal preferably extends substantially perpendicularly to the electrodes, if the latter are oblong.

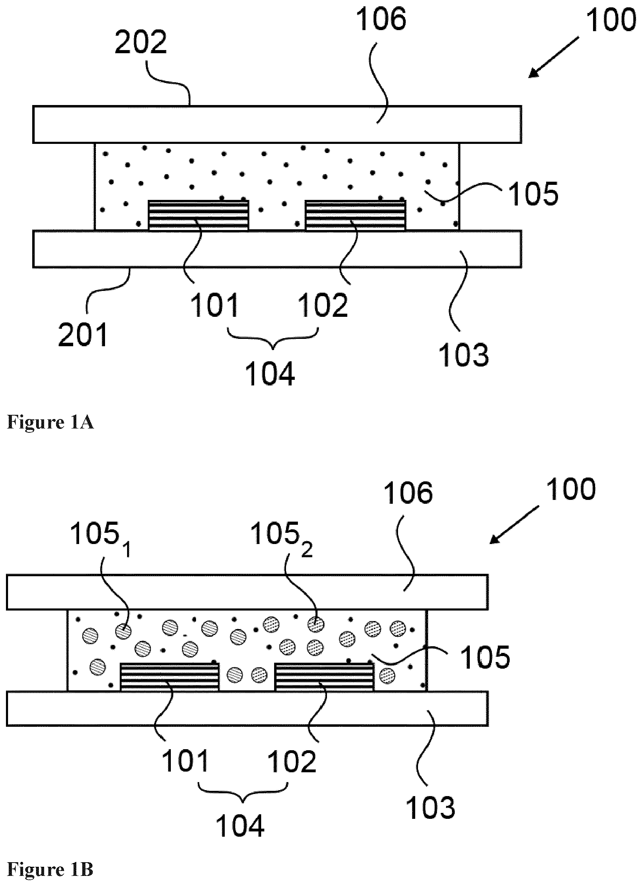

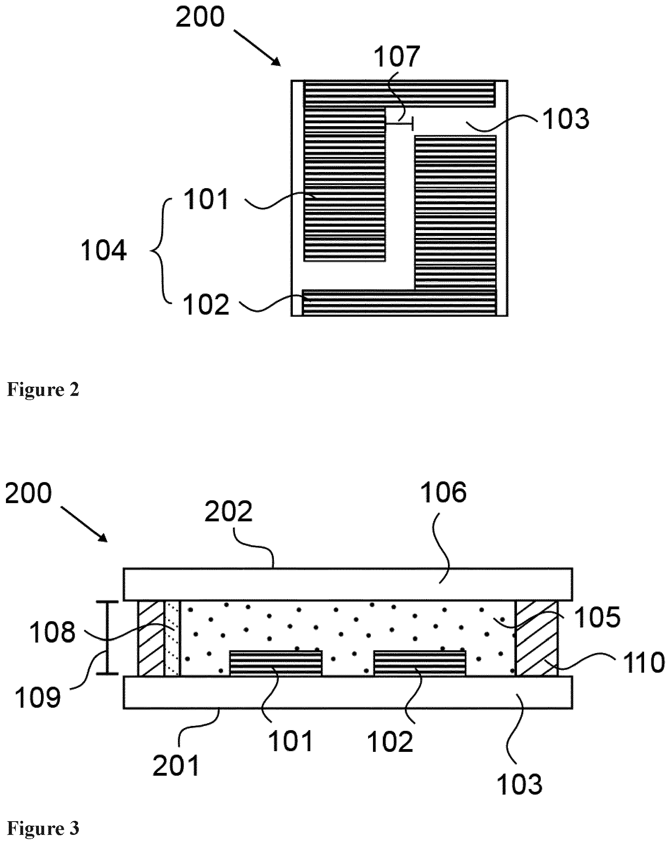

In an embodiment, said first and second electrodes are aligned on a vertical axis. "Vertical" and "horizontal" preferably refer to the orientations of the device shown in cross section as Figs 1A and 1B, for example. In these figures, the substrate is extending in a horizontal plane. Supposing that the substrate comprises a structured surface, the horizontal axis is an axis extending in parallel to the overall device, in particular in parallel to the opposed main surfaces 201, 202 of the device (Fig. 3).

In an embodiment, said first and second electrodes comprise and/or provide at least one generally oblong two-dimensional shape on said substrate, for example an oblong stripe.

In an embodiment, the device comprises one pair or more than one pair of individually addressable first and second electrodes.

In an embodiment, stripes of said first and second electrodes are alternatingly provided on said substrate. For example, a stripe of the first electrode is adjacent to a stripe of the second electrode, followed by a further stripe of the first electrode, or of an individually addressable 3^{rd} electrode, and so forth.

The device may comprise an uneven number of electrodes. For example, n+1 anodes and n cathodes, wherein each cathode is sidelined by two anodes, and the laterally outmost electrodes are anodes, or vice versa. In this embodiment, n is an integer of ≥1.

In an embodiment, the device comprises an even number of anodes and an uneven or even number of cathodes, wherein each anode and each cathode is individually addressable, or wherein a group comprising two or more anodes (or anode stripes) and a group comprising two or more cathodes (or cathode stripes) is individually addressable.

In an embodiment, both, said first and second electrodes are each configured to work as both, as an anode and as a cathode. Preferably, said first electrode can function as a cathode and as an anode, and said second electrode can function as a cathode and as an anode. Therefore, the terms "anode" and "cathode" are preferably not meant to imply a structural or functional difference, although such structural and/or functional difference is not excluded by the present invention.

Generally, when said first electrode functions as anode, the second electrode functions as cathode, and when said first electrode functions as cathode, the second electrode functions as anode. In some embodiments, the first and second electrodes work as both, in order to switch between the device states and/or optical states.

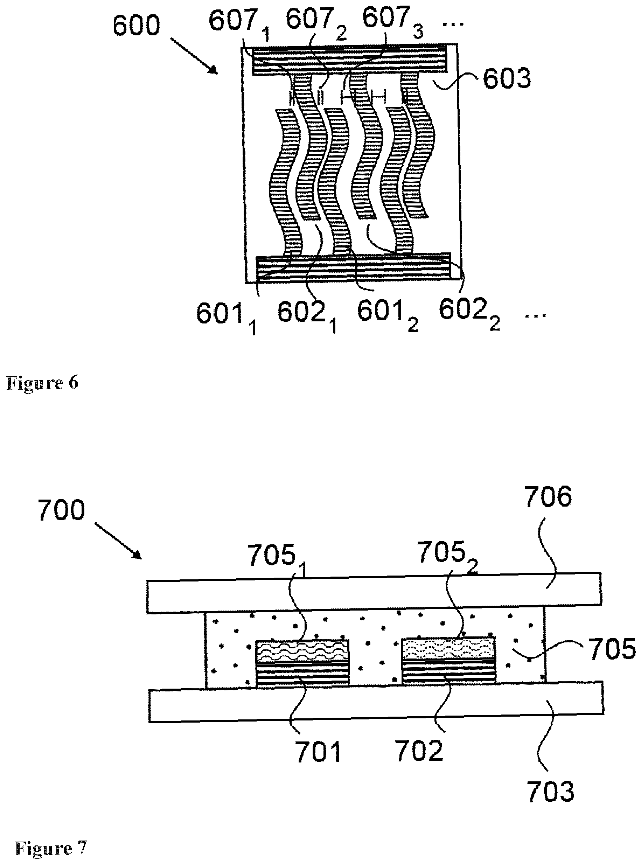

In an embodiment, said first and second electrodes are provided so as to form at least two adjacent stripes on said substrate. Said stripes may be straight, corrugated or curved, for example corrugated or wavy, as shown in Fig. 6, or may have any other two-dimensional form or design.

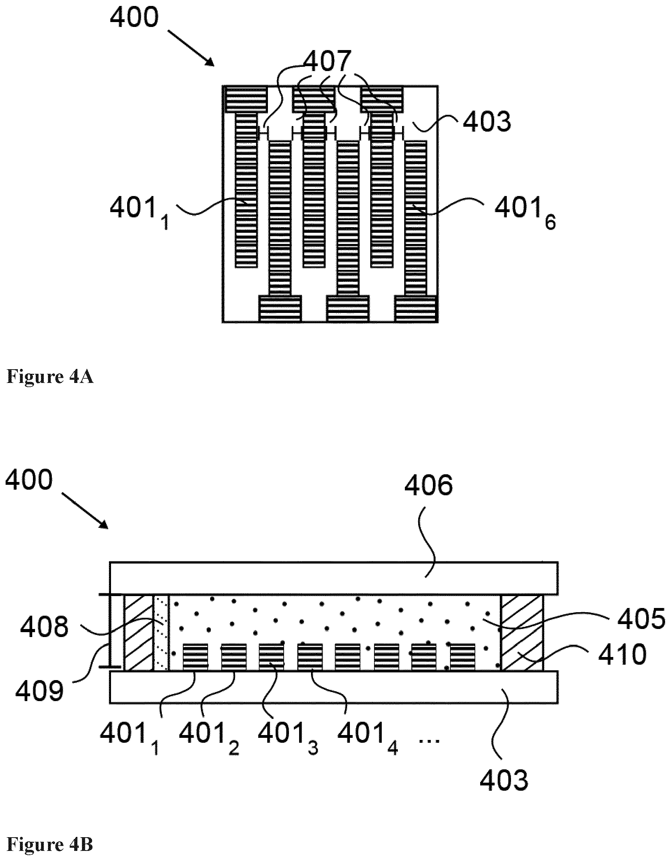

In an embodiment, said first and second electrodes are separated by a gap of from 5 nm to 2000 µm. In a preferred embodiment, the gap between adjacent first and second electrodes is in the range of 10nm to 1000µm, preferably 20 nm to 500 µm and most preferably 25nm to 300 µm. This distance preferably refers to the distance separating the first and second electrodes on the horizontal axis, parallel to the substrate. Furthermore, the indicated distance preferably refers to the shortest distance between the electrodes. If the electrodes comprise straight, parallel stripes, as shown in Fig. 4A, for example, the distance can be measured as the distance between the stripes in the direction extending perpendicularly to the stripes.

Preferably, the distance/gap between adjacent first and second electrodes is substantially constant, at least along part of the oblong extension of said electrodes. Preferably, the distance of the gap between adjacent first and second electrodes is substantially constant along a major part of the oblong extension of said electrodes.

The electrodes may comprise and/or consist of more than just one layer. For example, the electrode may comprise additional and/or optional layers, not shown in the figures. For example, additional layers may be provided on top of the transparent conductive layer, such as the TCO layer. Examples from which such one or more additional layers may be selected are scaffold layers, nanostructured layers, e.g. nanoporous layers, blocking layers, n-type semiconductor layers, p-type semiconductor layers, buffer layers, electron blocking layers, hole blocking layers, active organic layers, and combination of two or more of the aforementioned, for example. For example, porous scaffold layers may be deposited on said transparent electrode layer so as to provide an increased surface. Such scaffold layers may be considered to be part of the electrode. Such scaffold layers are generally used in devices where the electrochromic material is deposited on the electrode, for example on the scaffold layer.

It is understood that such additional and/or optional layers are part of the electrode, such that when one or more electrochromic materials are deposited on an electrode, the electrochromic material may be deposited on any one and preferably the outmost layer of the electrode.

In an embodiment, one, two or all three selected from said first electrode, said second electrode and said substrate are transparent. In another embodiment, none of said first electrode, said second electrode and said substrate is transparent.

In an embodiment, the device of the invention comprises a charge transport medium.

Preferably, said electrochromic material may be provided in said charge transport medium and/or on one or both selected from said first electrode and said second electrode.

Preferably, when said electric potential is established, changed, annulled or inversed between said first electrode and said second electrode, an optical state of the electrochromic material changes. Typically, the electrochromic material switches from colored to transparent or vice versa.

The charge transport medium is preferably in contact with said first and second electrodes. For example, the electrodes are at least partially immersed in said charge transport medium and/or are surrounded by said charge transport medium. In some embodiments, the charge transport medium has the characteristics of a fluid and/or of a liquid.

Preferably, the charge transport medium comprises a charge transport mechanism, allowing for the transport or shuttling of electrons or ions between the first and second electrodes. For example, the charge transport material may comprise an electrolyte, a liquid salt, a hole transport material and/or an electron transport material, or the like. The transport of electrons may take place by electronic motion, electron hopping (direct current flow), or by diffusion of molecules (electron shuttling), which molecules are generally redox-species.

In an embodiment, the charge transport material comprises at least one redox-species, suitable to assist in the transport of electrons between said first and second electrodes. In an embodiment, the device of the invention comprises two or more redox species. The redox species may be electrochromic materials, but redox species that are not electrochromic may also be present in the device, in particular in the charge transport medium.

The charge transport material may comprise dissolved ions to compensate the electric charge of the electrochromic materials.

In an embodiment, the charge transport medium may contain one or more selected from a solvent, a polymer matrix, a plasticizer, conductive salt and/or other materials to tailor the chemical, electrical, mechanical or rheological properties of this material.

Preferably, the device of the invention provides a closed space in which said charge transport medium is provided. To this end, a cover or second substrate may be provided. The second substrate is preferably opposed to said first substrate, the first substrate carrying said electrodes.

In an embodiment, said substrate is a first substrate, and wherein the device comprises a second substrate or cover, said first substrate and said cover preferably defining opposed outer surfaces main of said device.

Preferably, the cover or second substrate extends substantially in parallel to said first substrate. Preferably, said outer main surfaces extend substantially in parallel.

Preferably, the second substrate is provided at a defined distance from said first substrate, thereby defining the space in which said charge transport medium is provided.

Preferably, the distance separating said first substrate and said second substrates is in the range of 0.5µm to 2mm, more preferably 1µm to 1mm. In a preferred embodiment, the distance separating said first substrate and said second substrates or cover is from 10 µm to 500 µm. The distance between the substrates is illustrated by reference numerals 109, 409 and 509 in Figs 3, 4B and 5B, respectively. Preferably, the distance is substantially constant, at least in the area of the device covered by said first, second and optionally further electrodes. The cover or second substrate is preferably at least partially transparent to visible light. Preferably, the second substrate or cover is transparent. Preferably, one or both selected from said first substrate and said second substrate or cover is/are transparent.

Preferably, the second substrate or cover is non-conductive, is free of any electrode and/or is not connected to any electrode and/or lacks an electrode. Preferably, the second substrate lacks a conductive material, preferably it lacks a transparent conductive layer, comprising a conductive material, such as a transparent conductive oxide (TCO).

As a conductive layer is preferably absent, the second substrate or cover is preferably more transparent than the first substrate comprising said conductive layer. This is due to the light absorption or scattering by the conductive layer, even if it is substantially transparent.

Preferably, the second substrate lacks an electrode contributing to the establishment of an electric potential with any one of said first and second electrodes.

Preferably, the second substrate lacks an electrode contributing to change the optical state of an electrochromic material contained in the device and/or contributing to changing the device state (transparent/colored).

The second substrate, if present, may have a thickness as indicated with respect to the first substrate, preferably in the range of 0.01 to 15 mm, preferably 0.05 to 7 mm, more preferably 0.1 to 5 mm, most preferably 0.5 to 2 mm.

Instead of a second substrate, the device may comprise a cover and/or closure provided, for example, by a lacquer or organic polymer. The second substrate is not required to contribute to the mechanical stability of the device, as this function is preferably fulfilled by the substrate on which said first and second electrodes are deposited.

Furthermore, in case a second substrate or a cover is employed, the device may comprise sealing, for example lateral sealing, enclosing said closed space laterally if seen as in Fig. 3, for example. For example, the sealing preferably is provided so as to encompass and/or surround said electrodes laterally, whereas said first substrate and said cover or second substrate provide the opposed, preferably flat top and bottom sides of the device. Such sealings can be made of UV curing adhesives, thermal curing adhesives, acrylates, epoxy resins, silicones or similar materials, for example.

The device of the invention preferably comprises at least one electrochromic material. The electrochromic material is preferably a redox active species.

In an embodiment, said electrochromic material is provided so as to be able to migrate and/or move by diffusion within said charge transport medium. If there are more than one electrochromic material, for example a first and second electrochromic material, one or both of said electrochromic materials may be provided so as to be able to migrate and/or move by diffusion within said charge transport medium. This embodiment applies in particular when the electrochromic material is not deposited.

In another embodiment, said electrochromic material may be deposited, for example on some or all of the electrodes. In an embodiment, said electrochromic material is deposited on one or both of said first and second electrodes. It is understood herein that when the electrochromic material is deposited, this refers to the substantially permanent connection of the electrochromic material on the electrode. Generally, the electrochromic material is not free to move or diffuse, for example within said charge transport medium, but is substantially immobile if it is deposited. Any type of deposition is encompassed, including attachment by chemical reaction, for example via functional groups of the electrochromic material.

On the other hand, if an electrochromic material is free to migrate within said charge transport medium, the electrochromic material may move to an electrode during the operation of the device and may stay there for some time, generally non-permanently. For example, once a migrating electrochromic material has changed the redox state at an electrode (e.g. anode), the material will leave that electrode and generally migrate in the direction towards the other electrode (e.g. cathode).

In a preferred embodiment, the device of the invention comprises two or more redox active species, for example a first redox active species, a second redox active species, and optionally a third and/or further redox active species. In an embodiment, said electrochromic material is or comprises a first redox active species, and wherein said device comprises at least a second redox active species.

In an embodiment, said electrochromic material is a first electrochromic material, and wherein said device comprises a second electrochromic material. Said second electrochromic material preferably is or comprises said second redox active species.

In an embodiment, said first and second electrochromic materials are preferably different materials, having preferably different optical properties and/or similar optical properties when considering the first and second electrochromic materials in the operational redox state that the materials assume when the device is operating.

In an embodiment, said first and second electrochromic materials can both exist at least in a first optical state and in a second optical state, wherein said first optical state is brighter, more transparent and/or less colored than said second optical state.

In an embodiment, said first and second electrochromic materials are complementary electrochromic materials.

The complementarity preferably is such that when said first electrochromic material is at least partially oxidized and said second electrochromic material is at least partially reduced, both, said first and second electrochromic materials are in the first optical state; and, when said first electrochromic material is at least partially reduced and said second electrochromic material is at least partially oxidized, both, said first and second electrochromic material are in the second optical state, or vice versa.

In other words, in accordance with an embodiment, when both, said first and second electrochromic materials are in the first optical state, one of the first and second electrochromic materials is reduced and the respective other electrochromic material is oxidized, and preferably vice versa.

For example, in the first optical state, said first electrochromic material is reduced and the second electrochromic material is oxidized, and in said second optical state, the first electrochromic material is oxidized and the second electrochromic material is reduced.

The first optical state is preferably defined herein to be more transparent to visible light than the second optical color state.

In an embodiment, the first optical state is transparent or substantially transparent, or a bright color, such as bright grey, yellow, orange, bright green, bright red, bright blue, and the like.

In an embodiment, the second optical state is selected from black and dark colors, such as dark blue, dark brown, dark grey, dark green and dark red.

Above it has been stated that said first and second electrochromic materials preferably have different optical properties. This is preferably correct when one compares the two materials in the same of the two operational redox states, considering the materials in an isolated manner, outside the device, for example.

In this specification, the "operational redox states" are the redox states of a material at which the material has the desired optical properties, and which are thus the redox states the material assumes during operation of the device. For example, when both EC materials are in the (at least partially) reduced state, one of the materials is preferably in a more transparent and the other is preferably in a less transparent or colored optical state. In this sense, the complementary EC materials have different optical properties.

Considering the preferable complementarity and the operational redox states that the EC materials assume in the device when the device is operating, for example when a voltage is applied, changed, annulled or inversed, it is more preferable that the two EC materials have similar optical properties.

When the device is operating, the two EC materials are preferably present in two opposed, inversed or complementary redox states, that is, one EC material is preferably (at least partially) reduced, while the other EC material is preferably (at least partially) oxidized. Accordingly, the optical properties of the two materials may be considered in view of or in dependence of the operational redox state that the materials assume when they are in the operating device. In this situation, it is preferable that the two electrochromic materials have similar or the same optical properties. In a preferred embodiment, the first and second electrochromic materials have the same or similar optical properties when they are in their complementary redox state and/or in their complementary optical state. "Similar optical properties" is preferably used here to indicate that the two materials preferably have similar first and second optical states. For example, both materials have a transparent state and a non-transparent state. Preferably, in the first and/or second optical states, the two materials have a similar color, for example a dark color in the second optical state.

When the device comprises first and second electrochromic materials, one or both may be provided so as to be able to migrate and/or move by diffusion within said charge transport medium. In another embodiment, one or both of said first and second electrochromic materials may be deposited on an electrode. In an embodiment, said first electrochromic material is deposited on said first electrode and said second electrochromic material is deposited on said second electrode, or vice versa.

The invention does not exclude the possibility of a device comprising two or more different electrochromic materials, a first electrochromic material being deposited on an electrode and the second electrochromic material being provided to be able to diffuse in the charge transport material.

In an embodiment, said at least one electrochromic material is deposited so as to be in permanent electric contact with said first electrode and/or said second electrode, preferably deposited on said first electrode and/or said second electrode, or on an additional layer deposited on said first electrode and/or said second electrode.

The term "permanent", for example in the expression "permanent electric contact" encompasses the period when the device is functioning normally, for example functioning as envisaged by the manufacturer of the device. The term "permanent" is not to be understood as meaning "eternal".

For the purpose of the present specification, the expression "in electric contact" and/or "electrically connected" means that steady current (electrons, holes) flow occurs between the items that are electrically connected under fixed potential difference. Diffusion of molecules is not considered to be a current flow.

Preferably, the electrochromic material is provided such that when an electric potential is established, changed, annulled or inversed between said first electrode and said second electrode, the optical state of the electrochromic material changes. Preferably, said electrochromic material undergoes a color change.

In an embodiment, the invention provides an electrochromic system comprising the device of the invention, the system further comprising a control unit configured to establish said electric potential between said first electrode and said second electrode. In other embodiments, the control unit may be part of the device, for example integrated in the device. In other embodiments, the control unit, or part thereof, may be configured to control the device remotely.

The invention also provides a method for producing an electrochromic device, in particular a device as disclosed herein above. Separate steps of the method may be derived from the present disclosure.

In an embodiment, the method of the invention comprises providing electric circuit and/or current paths suitable to enable or assist in the establishment of an electric potential between said first and second electrodes. The circuit and/or current paths preferably enable and/or assist in one or more selected from the group of: establishing, changing, annulling and inversing the electric potential between the electrodes. Preferably, the device of the invention comprises such electric circuit and/or current paths.

In an embodiment, the method of the invention comprises providing a control unit and/or a microcontroller for controlling the electric potential between said first and second electrodes. Controlling the electric potential may include establishing an appropriate voltage at an appropriate moment in time resulting in a desired change of the optical state of one or more of the electrochromic materials in the device, stopping, changing, inversing or maintaining that voltage at an appropriate moment in time in order to achieve the desired optical state of one or more of the electrochromic materials at that appropriate moment.

**Figure 1A** shows an electrochromic device 100 in accordance with an embodiment, the device comprising two transparent substrates 103 and 106, made from a transparent material selected from the substrate materials disclosed elsewhere in this specification. The substrates provide the mechanical stability of the device. The transparent substrate 103 is coated with an transparent conductive layer (TCL) 104 separated with electrical isolation into the different electrodes 101 and 102. The TCL is made from a material selected from the materials listed elsewhere in this specification, such as a TCO. The active material 105 contains at least two redox active species, where at least one of them shows an electrochromic behavior. Preferable, one redox state of the EC species is transparent, whereas another state shows coloration, preferably a strong coloration. The transparent or light color state may be also referred to as the first optical state, and the colored state as the second optical state. The active material 105 may also contain a solvent, a polymer matrix, a plasticizer, conductive salt and/or other materials to tailor the chemical, electrical, mechanical or rheological properties of this material.

Applying a voltage between the electrodes 101 and 102 in the range of -10V to 10V, preferably of -2V to 2V as demonstrated in Fig.1B, one redox active species 1051 change its redox state by exchanging electrons with the electrode 101, whereas the other redox species 1052 changes its redox state by exchanging electrons with the electrode 102. In case of the electrochromic species the material changes its coloration, preferably from a transparent to a colored state. In case both species 105₁ and 105₂ are electrochromic, the whole systems change from transparent to colored by applying the voltage.

To guarantee the coloration of the active material 105 the propagation of the coloration through the active material 105 must be granted. This is assured by diffusion of redox active species 105₁ and/or 105₂, as illustrated in **Figure 1B****,** and/or by other electron transport mechanisms in the active material 105 such as electron shuttling, electron hopping, or similar. This change of the redox state is reversed, if the redox active species 1051 and/or 1052 exchange electrons with each other and/or with one of the electrodes 101 and/or 102.

**Figure 2** is a top down view on the substrate 103 and the electrodes 101 and 102 provided thereon. Assuming the device 100 is transparent, Fig. 2 may also be considered a top down view on the entire device of Figs. 1A and 1B. The TCL 104 is separated into the electrodes 101 and 102, separated from each other by a gap 107 with 10nm to 500µm width, with electrical isolation. Each of the electrodes are individually accessible to apply the electrical voltage.

**Figure 3** shows an EC device 200 having two flat and preferably parallel, opposed outer main surfaces 201, 202. This EC device uses the electrode structure described with respect to Fig. 2 with two transparent electrodes 101 and 102 on the transparent substrate 103, with the active material 105 and a nonconductive covering substrate 106. To prevent leakage and the penetration of gas and moisture an additional sealing 110 is used to protect the active material for example from ambient oxygen. The sealing 110 can also provide or contribute to the mechanical stability of the device. The sealing 110 can be made of UV curing adhesives, thermal curing adhesives, acrylates, epoxy resins, silicones or similar materials. The sealing 110 can also be a combination of two or more different sealing materials/layers. The distance 109 between the transparent substrates 103 and 106 is controlled by the thickness of the active material 105 and/or the thickness of the sealing 110. For more accurate thickness control, a spacer 108 can be added to the active material 105 or the sealing 110. This spacer 108 can be glass spheres, aluminum particles, polymer spheres or particles or similar. The active material 105 contains at least two redox active species, where at least one of them is electrochromic. By applying an electric voltage between the electrodes 101 and 102 the transparency of the device can be adjusted.

**Figure 4B** shows an EC device 400 using the electrode structure shown in **Figure 4A** with multiple individual switchable transparent electrodes 401₁-401₆ on the transparent substrate 403, with the active material 405 and a nonconductive covering substrate 406. To prevent leakage and penetration of gas and moisture a sealing 410 and a spacer 408 as described with respect to Fig. 3 (110 and 108) are applied. The active material 405 contains at least two redox active species, where at least one of them is electrochromic. By applying an electric voltage between any two or more electrodes 401ᵢ, the transparency of the device can be adjusted, where the coloration on top of each transparent electrode 401ᵢ is dependent on the electric potential at each electrode.

The letter i may in principle be any positive natural number, including odd numbers, with the proviso that at least two electrodes are present such that an electric potential can be established. As the figures are for schematic illustration, the device of the invention may comprise many more electrodes, for example from 2 to 20000 electrodes. The letter i thus expresses that the figures are not intended to limit the invention to a particular number of electrodes.

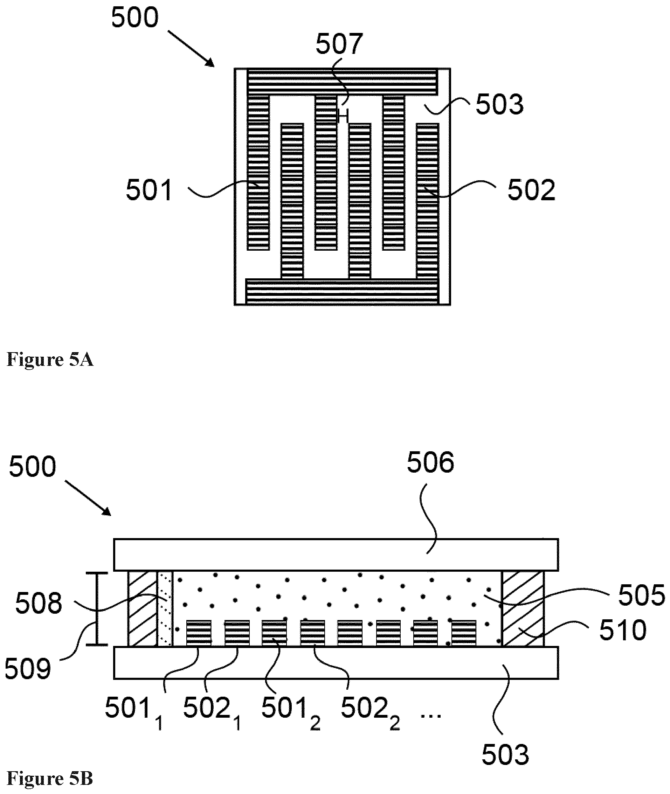

**Figure 5B** shows an EC device 500 using the electrode structure shown in **Figure 5A** with multiple switchable transparent electrodes 501ᵢ and 502ᵢ on the transparent substrate 503. The electrodes 501₁, .... 501ᵢ are addressed simultaneously using one connection. As well as the electrodes 502₁, ... 502ᵢ are also addressed simultaneous using one connection. Electrodes 501₁, .... 501ᵢ may be considered as one (e.g. the first) electrode comprising a plurality of stripes (here i stripes). On the same line, electrodes 502₁, ... 502ᵢ are may be considered as one (e.g. the second) electrode comprising a plurality of stripes.

The electrodes are alternatively arranged on the transparent substrate 503. The active material 505 is sandwiched between the transparent substrate 503 carrying the transparent electrodes 501₁, ... 501ᵢ and 502₁, ... 502ᵢ and a nonconductive covering substrate 506. To prevent leakage and penetration of gas and moisture a sealing 510 and a spacer 508 as described with respect to Fig. 3 (110 and 108) is applied. The active material 505 contains at least two redox active species, where at least one of them is electrochromic. By applying an electric voltage between the electrodes 501 and 502 the transparency of the device can be adjusted.

**Figure** 6 shows the electrode structure of another electrochromic device 600. The device comprises multiple, arbitrarily shaped, transparent conductive electrodes 601₁, ... 601ᵢ and 602₁, ... 602ᵢ separated by arbitrarily shaped gaps 607₁, ... 607ᵢ.

**Figure** 7 shows an EC device 700 with two active materials 705₁ and 705₂, each carrying at least one redox active species wherein at least one of the active materials 7051 or 7052 carries at least one electrochromic species, are applied to the electrodes 701 and 702 and the active materials 7051 and/or 7052 building a compact film on top of the electrodes 701/702, respectively. To grant electrical connection between the electrodes an electrolyte 705 is preferably used. The electrolyte preferably comprises dissolved ions to compensate the electric charge of the active material 705₁ and 705₂.

### Example

Herein below, an example of the invention is disclosed. This example is for illustration only and is not intended to limit the scope of the present invention.

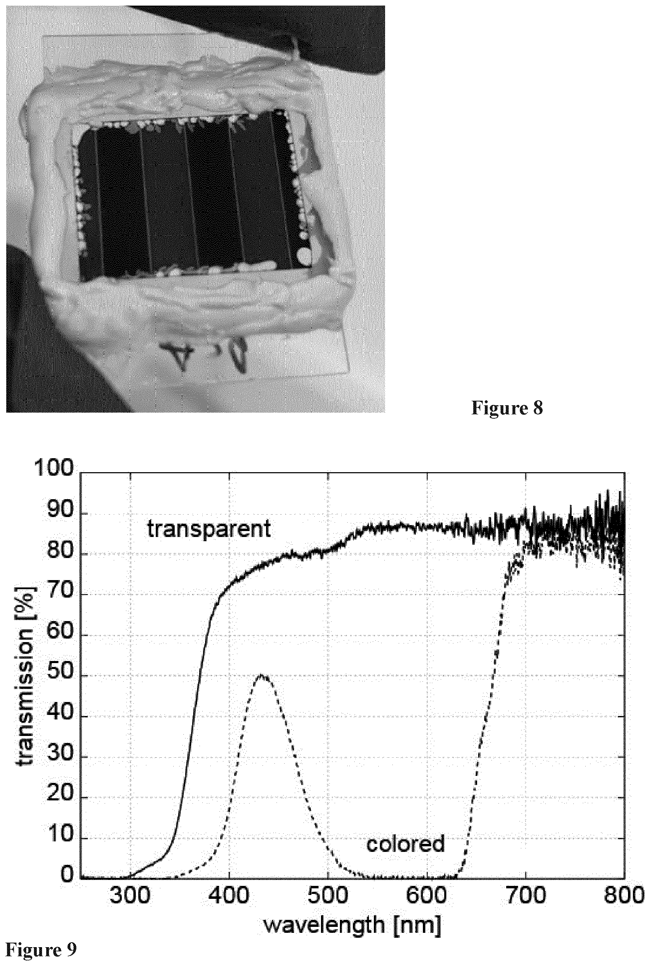

The previously described idea was demonstrated using an electrode structure according to Fig. 5A with six electrode stripes with a width of 4mm and 24mm length, separated by a gap of 60µm. Three stripes were connected from one lateral edge of the substrate and three stripes from the opposed lateral edge of the substrate so as to form two electrically distinct electrodes, wherein stripes of the two electrodes are arranged alternatingly on the substrate. In this way only two connectors are needed to drive the electrodes of the device. The substrate dimensions where 25mm in width and 34mm in length. The nonconductive covering glass with 25mm x 25mm in width and length was placed at the center of the patterned electrode carrying substrate, leaving 4.5mm uncovered on each side of the substrate for electrical connections. Both substrates were combined using a double sided Kapton tape, which simultaneously acts as a parallel spacer to keep the substrates separated of about 93µm. The void between the substrates was filled with the active material containing 50mmol/l diethyl-viologen, 50mmol/l TMPD and 0.5mol/l TBAPF₆ dissolved in a propylene-carbonate containing PMMA solution (80%:20%), which was polymerized between the substrates. To protect the active material from ambient oxygen and moisture an additional sealing was added, made of TorrSeal. The active material forms an electrochromatic gel in which both redox active species can move freely within the active material as illustrated in Fig. 1B. By applying a voltage of 0.7V between the electrodes, the coloration of the viologen occurs on the cathode whereas the TMPD coloration takes place on the anode. This results in a locally distinguishable coloration of the different species at the respective electrode as can be seen in the picture of the colored device shown in **Figure 8****.**

**Figure 9** shows the spectral transmission data of the device shown in Fig. 8. It is demonstrated, that the transmission in the transparent state is outstandingly high, due to the fact that the nonconductive covering glass shows a significant higher transparency than conductive substrates. Thus, a transparency of this device of 86.5% was achieved without further optical engineering of the glass substrate, such as anti-reflective coatings. The transparency of the device can be tuned from 86.5% to 0.1% at 555nm by applying a voltage of 0.7V.

While certain of the preferred embodiments of the present invention have been described and specifically exemplified above, it is not intended that the invention be limited to such embodiments. Various modifications may be made thereto without departing from the scope and spirit of the present invention, as set forth in the following claims.

## Claims

1. An electrochromic device (100, 200, 400, 500, 600, 700) comprising :
- a substrate (103);
- one or more electrochromic material (105₁, 105₂);
- a first electrode (101) and a second electrode (102), wherein said first and second electrode can work as an anode and a cathode of said device, respectively, and/or vice versa,
wherein said first and second electrodes (101, 102) are provided on said substrate (101).

2. The device of claim 1, wherein the device is configured to establish and/or allow an establishment of an electric potential between said first electrode (101) and said second electrode (102) during operation of the device.

3. The device of any one of claim 1 and claim 2, wherein said one or more electrochromic material (105₁, 105₂) is provided in said device such that when an electric potential is established, changed or inversed between said first electrode (101) and said second electrode (102), an optical state of the electrochromic material (105₁, 105₂) changes.

4. The electrochromic device of any one of the preceding claims, wherein said first electrode (101) and said second electrode (102) are adjacently provided on said substrate (103).

5. The electrochromic device of any one of the preceding claims, wherein said first electrode (101) and said second electrode (102) are provided so as to form at least two adjacent stripes on said substrate (103).

6. The electrochromic device of any one of the preceding claims, wherein said first electrode (101) and said second electrode (102) are separated by a gap of from 10 nm to 1000 µm.

7. The electrochromic device of any one of the preceding claims, wherein said first electrode (101) and said second electrode (102) comprise or essentially consist of a transparent conductive layer (TCL), preferably comprising a transparent conductive oxide (TCO), or are in electric contact with said transparent conductive layer, said transparent conductive layer being preferably deposited on said substrate (103).

8. The electrochromic device of claim 7, wherein said transparent conductive layer has a thickness of 0.1 nm to 1000 nm.

9. The electrochromic device of any one of the preceding claims, wherein said first electrode (101) and said second electrode (102) are provided, for example deposited, on said substrate (103) and/or wherein none, one, two or all three selected from said first electrode (101), said second electrode (102) and said substrate (103) are transparent.

10. The electrochromic device of any one of the preceding claims, wherein said substrate is a first substrate (103), and wherein the device comprises a second substrate or cover (106), said first substrate (103) and said cover (106) preferably defining opposed outer surfaces (201, 202) of said device .

11. The electrochromic device of claim 10, wherein said cover (106) is nonconductive, is free of any electrode and/or is not connected to any electrode.

12. The electrochromic device of any one of claims 10 and 11, wherein one or both selected from said first substrate (103) and said cover (106) is/are transparent.

13. The electrochromic device of any one of the preceding claims, comprising a charge transport medium (105), wherein said electrochromic material is provided:
- in said charge transport medium (105), and/or,
- on one or both selected from said first electrode (101) and said second electrode (102).

14. The electrochromic device of any one of the preceding claims, which comprises a charge transport medium, and wherein said electrochromic material is provided so as to be able to migrate and/or move by diffusion within said charge transport medium (105).

15. The electrochromic device of any one of the preceding claims, wherein said electrochromic material is or comprises a first redox active species (105₁), and wherein said device comprises at least a second redox active species (105₂).

16. The electrochromic device of any one of the preceding claims, wherein said electrochromic material is a first electrochromic material (105₁), and wherein said device comprises a second electrochromic material (105₂), wherein said second electrochromic material preferably is or comprises a second redox active species (105₂).

17. The electrochromic device of claim 16, wherein said first and second electrochromic materials (105₁, 105₂) are preferably different materials, having preferably different optical properties and/or similar optical properties when considering the first and second electrochromic materials in the operational redox state that the materials assume when the device is operating.

18. The electrochromic device of any one of claims 16 and 17, wherein said first and second electrochromic materials (105₁, 105₂) can both exist at least in a first optical state and in a second optical state, wherein said first optical state is brighter, more transparent and/or less colored than said second optical state.

19. The electrochromic device of any one of claims 16-18, wherein said first and second electrochromic materials (105₁, 105₂) are complementary electrochromic materials, such that,
- when said first electrochromic material (1051) is at least partially oxidized and said second electrochromic material (1052) is at least partially reduced, both, said first and second electrochromic materials (105₁, 105₂) are in the first optical state; and,
- when said first electrochromic material (1051) is at least partially reduced and said second electrochromic material (105₂) is at least partially oxidized, both, said first and second electrochromic material (105₁, 105₂) are in the second optical state;
or vice versa.

20. The electrochromic device of any one of claims 16-19, wherein, when both, said first and second electrochromic materials are in the first optical state, one of the first and second electrochromic materials is reduced and the respective other electrochromic material is oxidized, or vice versa.

21. The electrochromic device of any one of the preceding claims, wherein said electrochromic material (705₁, 705₂) is deposited so as to be in electric contact with said first electrode (701) and/or said second electrode (702), preferably deposited on said first electrode (701) and/or said second electrode (702), or on an additional layer deposited on said first electrode (701) and/or said second electrode (702).

22. The electrochromic device of any one of the preceding claims, wherein a first electrochromic material (705₁) is deposited on said first electrode (701) and a second electrochromic material (705₂) is deposited on said second electrode (702), or vice versa.

23. The electrochromic device of any one of the preceding claims, which comprises one pair or more than one pair of individually addressable first and second electrodes (101, 102).

24. The electrochromic device of any one of the preceding claims, wherein said substrate (103) comprises an even and/or flat surface, wherein both said first electrode (101) and said second electrode (102) are provided on said even and/or flat surface, preferably so as to be deposited on a common vertical level defined by said even and/or flat surface.

25. The electrochromic device of any one of the preceding claims, further comprising a control unit configured to establish said electric potential between said first electrode (101) and said second electrode (102).

26. A method for preparing an electrochromic device, the method comprising:
- providing a substrate (103),
- forming first and second electrodes (101, 102) on said substrate (103), preferably by depositing said first and second electrodes (101, 102) on said substrate (103) or by otherwise directly connecting said first and second electrodes (101, 102) to said substrate (103),
- providing a chamber for enclosing said electrodes and for providing a space for a charge transport medium (105);
- providing said charge transport medium (105) in said space;
- providing an electrochromic material (105₁);
wherein said electrochromic material (105₁, 105₂) is added in said charge transport medium (105), and/or is deposited so as to be in electric contact with said first electrode (101) and/or second electrode (102).

27. The method of claim 26, wherein said electrochromic material is or comprises a first redox active species, and wherein said device comprises at least a second redox active species.

28. The method of any one of claims 26 and 27, further comprising providing electric circuit and/or current paths suitable to enable the establishment of an electric potential between said first and second electrodes.

29. The method of any one of claims 26-28, further comprising providing a control unit and/or a microcontroller for controlling the electric potential between said first and second electrodes.
